(19) Europäisches Patentamt / European Patent Office / Office européen des brevets

(11) **EP 1 804 071 B1**

(12) **FASCICULE DE BREVET EUROPEEN**

(45) Date de publication et mention
de la délivrance du brevet:
**15.10.2008 Bulletin 2008/42**

(51) Int Cl.:
***G01S 1/00*** *(2006.01)*

(21) Numéro de dépôt: **05301124.3**

(22) Date de dépôt: **29.12.2005**

(54) **Procédé d'optimisation des traitements de données de localisation en présence de plusieurs constellations de positionnement par satellites**

Verfahren zur Optimierung der Verarbeitungen von Lokalisierungsdaten bei Vorliegen mehrerer Satellitenpositionskonstellationen

Method for optimising positioning data processing where there are several satellite positioning constellations

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**04.07.2007 Bulletin 2007/27**

(73) Titulaire: **Alcatel Lucent
75008 Paris (FR)**

(72) Inventeur: **Monnerat, Michel
31240 L'Union (FR)**

(74) Mandataire: **Hedarchet, Stéphane
Alcatel Lucent
Intellectual Property & Standards
54 rue La Boétie
75008 Paris (FR)**

(56) Documents cités:
**EP-A- 1 571 460          US-A- 5 923 287
US-A1- 2003 231 132**

**EP 1 804 071 B1**

## Description

La présente invention concerne un procédé d'optimisation de traitement de signaux de systèmes de positionnement par satellites dans le cas où deux systèmes par satellites cohabitent et sont utilisés. On entend par système de positionnement par satellites les systèmes de type GPS (Global Positioning System), Galileo ou Glonass.

Dans un système de positionnement par satellites utilisant des récepteurs du type GNSS ("Global Navigation Satellite System") tels qu'un récepteur GPS ou Galileo, les signaux de données permettant au récepteur de calculer son positionnement proviennent de différents satellites (quatre au minimum pour déterminer les quatre inconnues x,y, z et t). Il est bien connu par l'homme de métier que le positionnement par un tel système suppose au préalable deux types de traitement au niveau du récepteur.

Le premier consiste à acquérir le signal provenant d'au moins quatre satellites, le second consiste à évaluer la distance séparant le récepteur des satellites dont le signal a été reçu. L'interface entre un système de navigation par satellites (RNSS pour "Radio Navigation Satellite System") et le récepteur utilisateur repose sur un signal radio électrique, lui même reposant sur une technique de spectre étalé, bien connue de l'homme de l'art. Les techniques de spectre étalé, dans leur forme les plus courantes telle que sur le GPS code C/A, Galileo F/Nav, reposent sur l'utilisation d'un code pseudo aléatoire périodique. Dans le cadre du GPS, ce code possède une période de 1 milliseconde (ms). Ce code se rajoute à un message de navigation numérique, ce message comportant un certain nombre d'informations nécessaires au calcul de la position du récepteur, typiquement :

- Référence horaire, bien connue sur GPS sous le nom de TOW ("Time of Week") correspondant à l'heure d'émission du message,
- La position du satellite au moment de l'envoi du message, bien connue sur GPS sous le nom d'éphémérides,
- Certaines corrections à apporter sur l'horloge bord du satellite, bien connues sur GPS sous le nom de "clock corrections" (corrections d'horloge en anglais), visant à corriger la Référence horaire par rapport à l'horloge globale du système,
- Certains paramètres de correction de propagation, tels que des paramètres de corrections de vitesse de propagation des ondes électromagnétiques dans les couches de l'atmosphère (en particulier la ionosphère),
- La position approximative des autres satellites de la constellation via des données dites d'almanachs.

Le débit des données est bien entendu plus lent que le débit du code d'étalement périodique. Typiquement sur le signal GPS SPS (GPS Satellite Positioning System), le débit de données s'élève à 50 bits par seconde, alors que celui du code est de 1,023 millions de bribes par seconde. Un code complet étant constitué de 1023 bribes (soit 1 ms). L'ensemble des données ajoutées modulo 2 au code d'étalement est transmis sur une porteuse. Typiquement sur GPS, la porteuse se trouve à 1,57542 GHz.

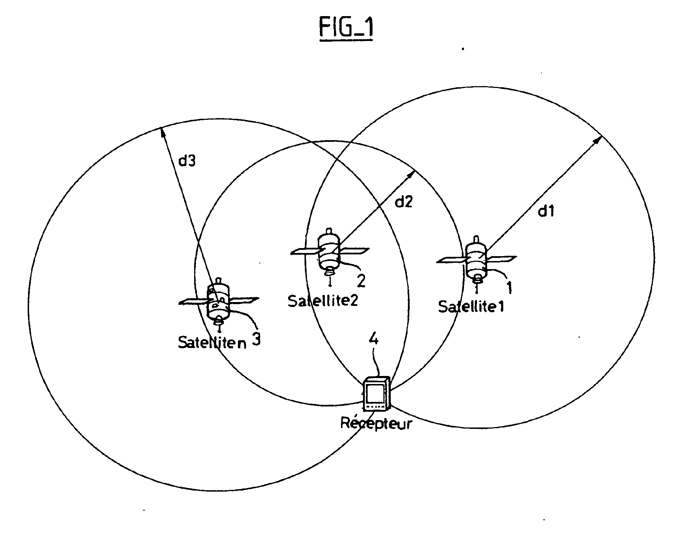

La détermination de la position du récepteur est représentée en figure 1. Le principe consiste pour un récepteur [4] à déterminer la distance le séparant d'au moins trois satellites de la constellation référencée par des satellites [1], [2] et [3] (trois satellites pour une localisation en deux dimensions et quatre satellites pour une localisation en trois dimensions). Une fois déterminées ces distances [d1], [d2] et [d3], le récepteur peut déterminer sa position à l'intersection des sphères dont le centre est matérialisé par la position de chacun des satellites eux-mêmes et dont le rayon est fourni par la distance [di]. La mesure de distance se fait par chronométrage de temps d'arrivée d'un signal radio électrique provenant du satellite. Il s'ensuit que les informations essentielles provenant du satellite via le message de navigation et que doit traiter le récepteur sont constituées par le couple (date d'émission, position du satellite au moment de l'émission). Le satellite transmet dans son message de navigation ses éphémérides (paramètres Képleriens) permettant au récepteur de calculer la position du satellite dans un référentiel lié à la terre. Les éphémérides sont constituées dans le cas de GPS de 16 paramètres.

| M0 | Anomalie Moyenne |
|----|------------------|
| Dn | Déplacement Moyen |
| E | Excentricité |
| (A)1/2 | Racine du demi grand axe |
| OMEGA 0 | Longitude du noeud ascendant |
| I0 | Inclinaison |
| W | Argument de périgée |
| OMEGA DOT | Dérivée temporelle de l'ascension droite |

(suite)

| I DOT | Dérivée temporelle de l'inclinaison |
|-------|-------------------------------------|
| Cuc | Amplitude cosinus de l'harmonique du terme de correction de l'argument de latitude |
| Cus | Amplitude sinus de l'harmonique du terme de correction de l'argument de latitude |
| Crc | Amplitude cosinus de l'harmonique du terme de correction du rayon de l'orbite |
| Crs | Amplitude sinus de l'harmonique du terme de correction du rayon de l'orbite |
| Cic | Amplitude cosinus de l'harmonique du terme de correction de l'angle d'inclinaison |
| Cis | Amplitude sinus de l'harmonique du terme de correction de l'angle d'inclinaison |

Ces paramètres sont répétés toutes les 30 secondes dans le message de navigation.

La position du satellite étant obtenue, il reste au récepteur à détecter l'heure d'émission du message afin de déduire le temps de propagation de l'onde et par suite la distance le séparant du satellite, et ainsi le rayon d'une des trois sphères nécessaires. Comme indiqué précédemment, l'heure fait aussi partie du contenu du message de navigation diffusé par le satellite. Cette heure est répétée toutes les 6 secondes. Cependant, il convient d'appliquer à l'heure lue dans le message de navigation une correction d'horloge satellitaire afin de ramener l'heure transmise dans une référence système commune à tous les satellites. Cette correction est, quant à elle, transmise toutes les 30 secondes.

En conclusion, il apparaît clairement qu'un récepteur ne peut être en mesure de déterminer sa position qu'au bout d'un temps minimum de 30 secondes après avoir acquis le signal. L'acquisition du signal s'entend par la toute première opération à effectuer par le récepteur, qui lui permet de se synchroniser fréquentiellement et temporellement sur les trains de bits transmis, phase essentielle pour la démodulation du message de navigation. L'acquisition consiste pour le récepteur à effectuer une recherche en temps-fréquence de l'énergie du signal provenant du satellite. L'accrochage fréquentiel sur le signal du satellite consiste pour le récepteur à s'accorder sur la fréquence à laquelle le signal du satellite est reçu. Le récepteur possède trois incertitudes le conduisant à effectuer cette recherche :

- Effet Doppler lié à la mobilité du satellite,
- Effet Doppler lié à la mobilité de l'utilisateur,
- Incertitude liée à la précision de l'horloge récepteur.

L'accrochage temporel consiste, pour le récepteur, à identifier une transition de code du signal reçu. Le code d'étalement dans le cas du GPS étant périodique de période d'1 ms, la recherche temporelle s'effectue sur un horizon d'1 ms. Une fois la transition de code identifiée, il est connu par l'homme de l'art comment identifier une transition bit puis la synchronisation trame diffusée dans le message de navigation.

Cette recherche temps-fréquence est très coûteuse en termes de complexité du récepteur et limite d'autant plus la performance du récepteur.

En résumé, le temps mis par un récepteur pour fournir une première position est contraint par une première phase très coûteuse de recherche de synchronisation temps-fréquence mais aussi par la lecture d'informations élémentaires sur le signal de navigation (supérieur à 30s).

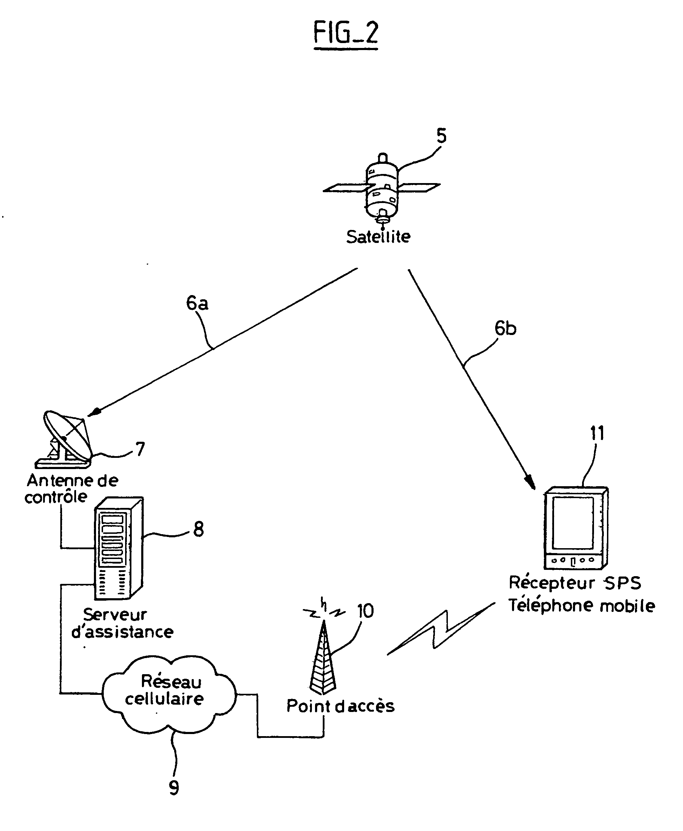

La méthode connue de l'homme de l'art pour palier ce problème est connue sous le nom de GPS Assisté ou GNSS assisté. Cette méthode consiste à coupler un système de télécommunication cellulaire et un récepteur de signaux de navigation par satellites. Ce procédé est décrit en figure 2. Il suppose que le récepteur de signaux de navigation par satellite soit couplé à un récepteur de télécommunication cellulaire [11] (terminal). Un équipement du réseau communément appelé serveur de données d'assistance [8] écoute en permanence les satellites de la constellation satellitaire via un signal radioélectrique [6a] et une antenne de contrôle référencée [7]. Les informations du message de navigation de chaque satellite sont alors stockées par le serveur [8]. Lorsque le récepteur [11] recherche sa position, il requiert un certain nombre de données d'assistance via une communication par une station de base [10] du réseau cellulaire [9] vers le serveur de données d'assistance. Les données d'assistance sont alors renvoyées par le serveur [8], vers le récepteur [11] via la station de base [10]. Ces données d'assistance facilite le traitement du signal [6b] reçu par le récepteur [11] provenant du satellite [5], et confère au récepteur une performance accrue, entre autres, en termes de temps de calcul. En effet, les données d'assistance peuvent être du type suivant :

- Contenu du message de navigation diffusé dans les signaux [6b] et [6a]. Le contenu est renvoyé avec un débit bien plus grand que le débit du message de navigation. Les temps mis pour acheminer les données essentielles à la détermination de la position passe ainsi de 30 secondes à 1 à 2 secondes.

- Une pré localisation du récepteur [11]. En effet, le récepteur [11] étant connecté à la station de base [10], le serveur [8] est en mesure de savoir que le récepteur se trouve dans le voisinage de la station de base [10]. Typiquement, dans un réseau de type GSM, la dimension des cellules est inférieure à 35km.

- Une référence horaire. Le serveur [8] recevant les données du satellite [5], est en mesure de connaître l'heure du système satellitaire et par suite de la diffuser au récepteur [11]. La plupart des réseaux de communication cellulaire étant asynchrones, la référence horaire transmise ne peut atteindre une précision que de l'ordre de 2 à 3 secondes.

- Différents types de corrections : corrections de vitesse de propagation, correction d'horloge bord du satellite, correction de propagation locale, etc.

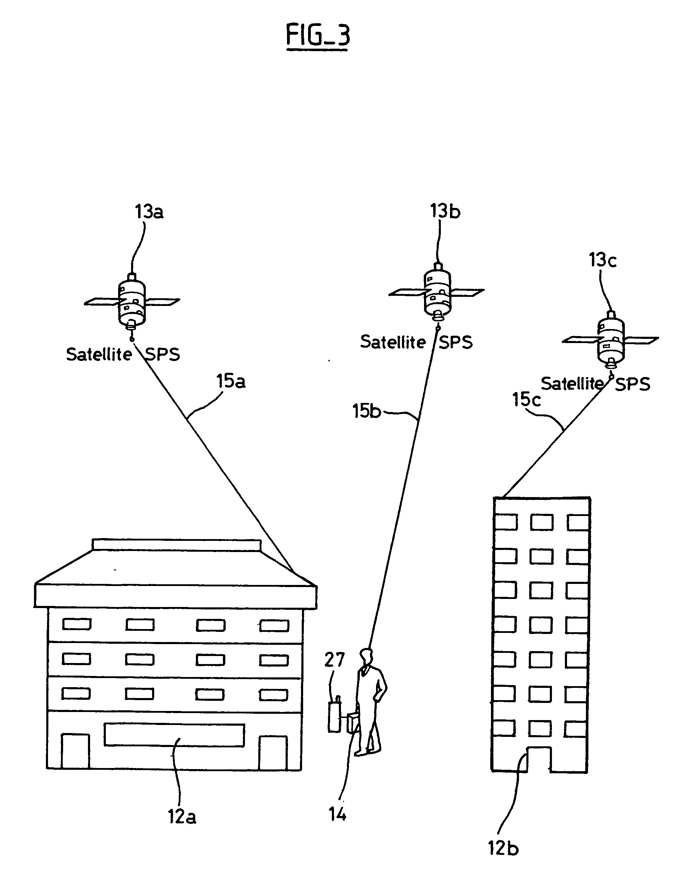

La connaissance d'une pré-localisation, des éphémérides des satellites et d'une référence horaire approximative permet au récepteur de calculer l'effet Doppler des satellites en vue, diminuant grandement l'incertitude fréquentielle à balayer lors de la phase d'acquisition. De même, les éphémérides des satellites étant connues via la communication avec le serveur [8], il devient inutile pour le récepteur [11] de démoduler ces données sur le message de navigation [6b], ce qui élimine la contrainte de 30 secondes mise en évidence précédemment pour calculer la position. Il suffit alors au récepteur de déterminer un événement horaire sur le signal du satellite [6b], soit, en d'autres termes, de trouver la transition de code d'étalement puis l'heure transmise, le TOW sur le signal GPS qui passe toutes les 6 secondes. Il apparaît ainsi clairement un gain de performance notable, tant en ce qui concerne le temps nécessaire au calcul d'un point de localisation qu'en ce qui concerne la sensibilité. On entend par sensibilité, la puissance minimum du signal reçu par le récepteur lui permettant un traitement adéquat.
L'exemple d'assistance est donnée dans un réseau cellulaire de type GSM, il va de soi qu'il peut être étendu à d'autres systèmes tels que des systèmes de type WIFI, WIMAX.
L'inconvénient d'un tel système, tel que précédemment exposé, repose sur la quantité de données d'assistance à faire transiter sur le réseau cellulaire pour chaque utilisateur. Il convient ainsi d'adopter un encodage strict et efficace pour la diffusion des données. C'est en ceci précisément l'objet de la définition des spécifications techniques de la norme 3GPP TS 44.031 visant à définir au mieux le contenu et l'encodage des données d'assistance.
La précision et la disponibilité de la fonction de localisation fournies par un tel système dépend directement de la géométrie de la constellation de satellites vue depuis le récepteur, et par conséquent des conditions de blocage liées à l'environnement d'évolution de l'utilisateur. Cet impact de la géométrie est bien connue de l'homme de l'art et se traduit sous la forme d'un coefficient dit de Dilution de Précision (DOP pour "Dilution of Precision" en anglais).
En milieu urbain, de type "canyon urbain", comme représenté sur la figure 3, le récepteur/émetteur (terminal mobile) [27] de l'utilisateur [14] cherchant à se positionner au moyen des satellites [13a], [13b], [13c] tente d'acquérir les signaux [15a], [15b], [15c]. En raison des obstacles que présentent les immeubles [12a] et [12b], les signaux [15a] et [15c] ne peuvent parvenir jusqu'au terminal [27] de l'utilisateur [14], qui est par suite contraint de n'utiliser que le signal [15b] du satellite [13b]. La géométrie de l'ensemble des satellites utilisés pour calculer le positionnement du terminal se retrouve affectée (dans l'exemple illustré sur la figure 3, la situation est extrême, puisque seul un satellite reste visible du terminal rendant le calcul du positionnement impossible).
Pour pallier ces problèmes d'obstacles importants en milieu urbain, les équipes de Recherche & Développement de la Demanderesse ont eu l'initiative de considérer l'utilisation conjointe des satellites des deux constellations GPS et Galileo. La constellation GPS contient nominalement 24 satellites. La constellation Galileo en contient 30. L'utilisation conjointe des satellites de la constellation GPS et Galileo permet de passer à un nombre de satellites utilisables allant jusqu'à 54 satellites. L'utilisation conjointe de plusieurs constellations est donc favorable à l'utilisation en ville ou en milieu présentant des conditions de blocage important. Il est à noter que la multiplicité des satellites augmente la probabilité d'un nombre de satellites visibles importants pour des conditions de blocage données.
Cependant, l'utilisation de plusieurs constellations possède, à son tour, plusieurs inconvénients :

- le nombre augmenté de satellites accroît automatiquement la complexité des traitements au niveau du récepteur terminal,
- le nombre augmenté de satellites augmente également automatiquement la quantité de données d'assistance transmises par un serveur d'assistance dans un système GNSS assisté.

Le document US 2003/231132 décrit un procédé de sélection de satellites, dans lequel les satellites, qui sont séparés sur au moins une certaine distance angulaire, sont sélectionnés pour l'acquisition du signal.
La présente invention propose un procédé autorisant le bénéfice de la multiplicité de constellations tout en éliminant les effets négatifs listés ci-dessus.
A cet effet, l'invention a pour objet un procédé de gestion des signaux satellitaires de positionnement provenant d'une première constellation de satellites d'un premier système de localisation par satellites pour localiser un terminal mobile d'un réseau de communications cellulaires et capable d'échanger des signaux satellitaires de systèmes de localisation par satellites,

caractérisé en ce que, des signaux satellitaires de positionnement provenant d'au moins une seconde constellation de satellites d'un second système de localisation par satellites, ledit procédé comprend les étapes suivantes :

- une étape de détermination d'une pré-localisation approximative du terminal,
- une étape d'estimation de la position des satellites desdites premières et secondes constellations,
- une étape de résolution de la liste des satellites visibles depuis le terminal en fonction de la pré-localisation approximative déterminée du terminal et de la position estimée des satellites,
- une étape de calcul de l'élévation et l'azimut de chaque satellite de la liste de satellites visibles depuis le terminal en fonction de la position approximative du terminal,
- une étape de tri des satellites de la liste de satellites visibles en:

  ■ privilégiant l'une desdites constellations satellitaires sur un critère de performance,
  ■ en excluant de la liste de satellites visibles l'ensemble des satellites appartenant aux autres constellations que la constellation privilégiée et dont la position en azimut et élévation du point de vue du terminal se trouve confinée dans un domaine angulaire prédéterminé par rapport à un des satellites de la constellation privilégiée.

Selon un mode de réalisation, l'attribution de la qualité de constellation privilégiée s'effectue par la construction de N groupes de satellites appartenant à la liste de satellites visibles depuis le terminal, où N correspond au nombre de constellations de positionnement par satellites utilisées dans le calcul de la position de l'utilisateur, un groupe de satellites étant défini en ce que tous les satellites d'un même groupe appartiennent à la même constellation, la constellation prenant la qualité de privilégiée avec un indice 1 étant considérée en ce que les caractéristiques physiques des signaux provenant de cette dernière sont plus favorables à la performance de positionnement.

Selon mode de réalisation, l'étape de tri des satellites et d'exclusion, pour chaque satellite $Sat_i$ de la constellation 2 à N, met en oeuvre les phases suivantes :

- Calcul de l'écart d'angle entre l'azimut du satellite $Sat_i$ et l'azimut de l'ensemble des satellites de la constellation 1,
- Calcul de l'écart d'angle entre l'élévation du satellite $Sat_i$ et l'élévation de l'ensemble des satellites de la constellation 1,
- Elimination du satellite $Sat_i$ de la liste de satellites visibles depuis la position du terminal si les écarts d'angle d'élévation et d'azimut sont inférieurs à une valeur donnée.

Selon un mode de réalisation, l'étape de détermination d'une pré-localisation approximative du terminal utilise soit le résultat d'une triangulation au sein du réseau de communications cellulaires pour en déduire la pré-localisation, soit une information provenant de la position d'une station de base de la cellule dans laquelle se trouve le terminal.

Selon un mode de réalisation, l'étape de détermination d'une pré-localisation approximative du terminal utilise une pré-localisation antérieure du terminal.

Selon un mode de réalisation, le procédé comprend une étape de traitement par le terminal des signaux satellitaires de chaque satellite de la liste de satellites visibles des satellites, privée de ceux qui ont été exclus.

L'invention a également pour objet un système de gestion des signaux satellitaires de positionnement provenant d'une première constellation de satellites d'un premier système de localisation par satellites pour localiser un terminal mobile d'un réseau de communications cellulaires et capable d'échanger des signaux satellitaires de systèmes de localisation par satellites,

caractérisé en ce que, des signaux satellitaires de positionnement provenant d'au moins une seconde constellation de satellites d'un second système de localisation par satellites, ledit système de gestion comprend :

- des moyens de détermination d'une pré-localisation approximative du terminal,
- des moyens d'estimation de la position des satellites desdites premières et secondes constellations,
- des moyens de résolution de la liste des satellites visibles depuis le terminal en fonction de la pré-localisation approximative déterminée du terminal et de la position estimée des satellites,
- des moyens de calcul de l'élévation et l'azimut de chaque satellite de la liste de satellites visibles depuis le terminal en fonction de la pré-localisation approximative du terminal,
- des moyens de tri des satellites de la liste de satellites visibles en :

  ■ privilégiant l'une desdites constellations satellitaires sur un critère de performance,
  ■ en excluant de la liste de satellites visibles l'ensemble des satellites appartenant aux autres constellations que la constellation privilégiée et dont la position en azimut et élévation du point de vue du terminal se trouve confinée dans un domaine angulaire prédéterminé par rapport à un des satellites de la constellation privilégiée.

- des moyens de transmission au terminal des données d'assistance relative à la liste de satellites visibles depuis le terminal, privée des satellites exclus.

Selon un mode de réalisation, le système comprend un serveur de données d'assistance qui intègre lesdits moyens de détermination d'une pré-localisation approximative du terminal, lesdits moyens d'estimation de la position des satellites desdites premières et secondes constellations, lesdits moyens de résolution de la liste des satellites visibles depuis le terminal en fonction de la pré-localisation approximative déterminée du terminal et de la position estimée des satellites, lesdits moyens de calcul de l'élévation et l'azimut de chaque satellite de la liste de satellites visibles depuis le terminal en fonction de la pré-localisation approximative du terminal, lesdits moyens de tri des satellites de la liste de satellites visibles, et des moyens de transmission au terminal des données d'assistance relative à la liste de satellites visibles depuis le terminal, privée des satellites exclus.

D'autres caractéristiques et avantages de l'invention apparaîtront plus clairement à la lecture, non limitative, de la description suivante des exemples particulier de réalisation de l'invention en référence aux figures suivantes :

- la figure 1, déjà décrite, représente la méthode connue de détermination de la position d'un récepteur par GPS,
- la figure 2, déjà décrite, représente la méthode connue de localisation par GPS Assisté ou GNSS assisté,
- la figure 3 représente une méthode connue de localisation par satellites en milieu urbain,
- la figure 4 représente un satellite de la constellation GPS proche d'un satellite de la constellation Galileo,
- la figure 5 représente un diagramme représentant les étapes que suit le procédé de l'invention selon un de ses modes de réalisation,
- la figure 6 représente un système de gestion selon un mode de réalisation de l'invention.

Les éléments remplissant des fonctions identiques porteront à travers le différentes figures les mêmes références.

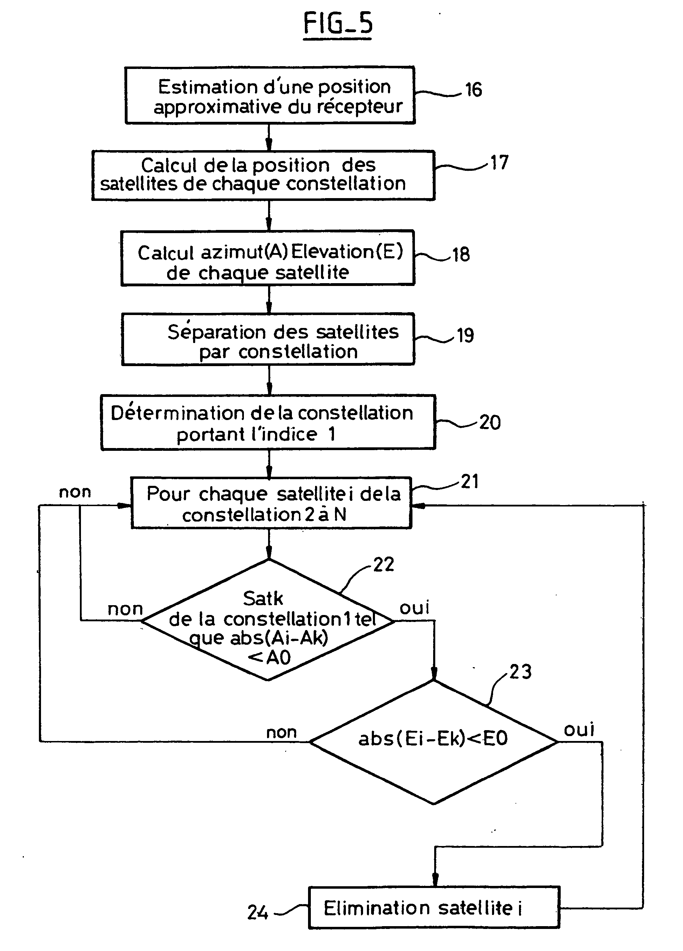

Selon un mode de réalisation illustré sur la figure 5, le procédé selon l'invention comprend les étapes suivantes :

- Etablir [16] une pré-localisation approximative du terminal. Cette pré-localisation approximative peut être déduite par l'utilisation d'un procédé GNSS assisté dans lequel le système de localisation déduit la position approximative de la cellule dans laquelle évolue le terminal. Elle peut également être déduite d'une localisation antérieure du terminal.
- Estimer [17] la position des satellites de chaque constellation (GPS et Galileo par exemple),
- Déduire, à partir de ladite position approximative du terminal et de ladite position des satellites, la liste des satellites visibles depuis le terminal,
- Déduire [18], à partir de la position approximative du terminal, l'élévation et l'azimut de chaque satellite de la liste de satellites visibles depuis le récepteur
- Trier les satellites de ladite liste de satellites visibles suivant la méthode suivante :

■ construction [19] de N groupes de satellites appartenant à la liste de satellites visibles depuis le terminal, où N correspond au nombre de constellations de positionnement par satellites utilisées dans le calcul de la position de l'utilisateur. Un groupe de satellites est défini en ce que tous les satellites d'un même groupe appartiennent à la même constellation. La constellation prenant l'indice numéro 1 étant considéré en ce que les caractéristiques physiques des signaux sont plus favorables à la performance de positionnement [20].
■ Processus de tri ([21], pour chaque satellite $Sat_i$ de la constellation 2 à N,

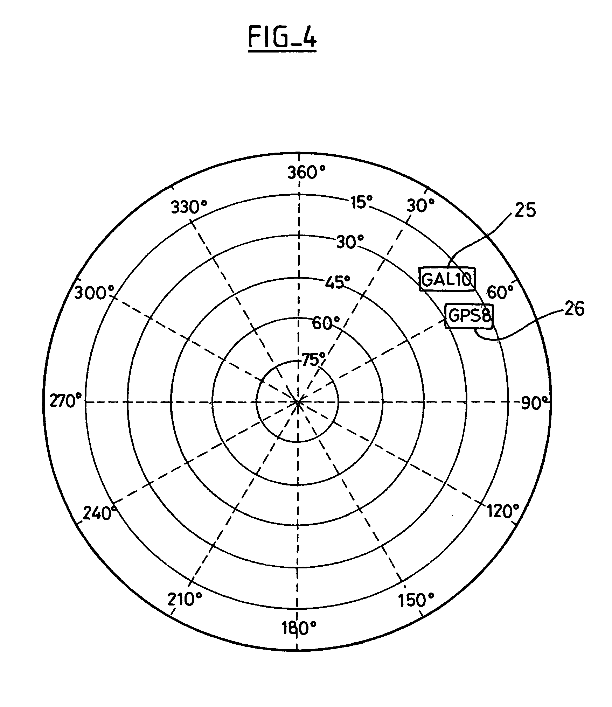

■ Calcul [22] de l'écart d'angle entre l'azimut du satellite $Sat_i$ et l'azimut de l'ensemble des satellites de la constellation 1,
■ Calcul [23] de l'écart d'angle entre l'élévation du satellite $Sat_i$ et l'élévation de l'ensemble des satellites de la constellation 1,
■ Si les écarts d'angle d'élévation et d'azimut sont inférieurs à une valeur donnée, il y a élimination [24] du satellite $Sat_i$ de la liste de satellites visibles depuis la position du terminal. On peut se référer à la figure 5, dans les étapes [22], [23] et [24] où A0 et E0 correspondent respectivement à un seuil de séparation azimut / élévation. Le cas de figure représenté à la figure 4 fournit l'exemple d'un satellite Galileo [25] très proche en azimut et en élévation d'un satellite GPS [26].

■ Traitement du signal de chaque satellite de la liste de satellites visibles des satellites, privée de ceux qui ont été éliminés comme indiqué précédemment.

La détermination des orientations des satellites d'une constellation de satellites s'effectue par la connaissance des almanachs de la constellation ou des éphémérides des satellites. Elle consiste à déterminer l'azimut et l'élévation de chaque satellite. A cette fin, il convient :

1. De déterminer la position de chaque satellite, comme décrit dans l'ICD 200C GPS à partir des almanachs ou des éphémérides.

2. Déterminer l'élévation de chaque satellite, comme suit

$$
\begin{cases}
\alpha = \dfrac{\pi}{2} - A\cos\left( \dfrac{\dfrac{(X_s - X_u)X_u + (Y_s - Y_u)Y_u}{\sqrt{a^2 - X_u^2 - Y_u^2}}}{\dfrac{(X_u^2 + Y_u^2)[(X_s - X_u)^2 + (Y_s - Y_u)^2]}{\sqrt{(a^2 - X_u^2 - Y_u^2)}}} \right), & if\ \phi \geq 0 \\[6em]
\alpha = -\dfrac{\pi}{2} + A\cos\left( \dfrac{\dfrac{(X_s - X_u)X_u + (Y_s - Y_u)Y_u}{\sqrt{a^2 - X_u^2 - Y_u^2}}}{\dfrac{(X_u^2 + Y_u^2)[(X_s - X_u)^2 + (Y_s - Y_u)^2]}{\sqrt{(a^2 - X_u^2 - Y_u^2)}}} \right), & if\ \phi < 0
\end{cases}
$$

où Xs,Ys,Zs sont les coordonnées du satellite considéré dans un référentiel lié à la terre,
et où Xu,Yu,Zu sont les cordonnées du terminal déterminées approximativement, par exemple grâce au réseau WIFI,
$\alpha$ est l'élévation du satellite considéré et $\phi$ la latitude du terminal,
a = 6378137.0 km (demi grand axe de la terre), b = 6356752.3142 km (demi petit axe de la terre).

3. Déterminer l'azimut de chaque satellite, comme suit en reprenant les même notations :

$$
\bar{n}\begin{vmatrix}
n_1 = \dfrac{1}{\sqrt{\dfrac{b^2}{a^2}\dfrac{x_u^2 + y_u^2}{a^2 - (x_u^2 + y_u^2)} + 1}}\dfrac{b}{a}\dfrac{x_u}{\sqrt{a^2 - (x_u^2 + y_u^2)}} \\[3em]
n_2 = \dfrac{1}{\sqrt{\dfrac{b^2}{a^2}\dfrac{x_u^2 + y_u^2}{a^2 - (x_u^2 + y_u^2)} + 1}}\dfrac{b}{a}\dfrac{y_u}{\sqrt{a^2 - (x_u^2 + y_u^2)}}, if\ \phi_u > 0, \\[3em]
n_3 = \dfrac{1}{\sqrt{\dfrac{b^2}{a^2}\dfrac{x_u^2 + y_u^2}{a^2 - (x_u^2 + y_u^2)} + 1}}
\end{vmatrix}
\bar{n}\begin{vmatrix}
n_1 = \dfrac{1}{\sqrt{\dfrac{b^2}{a^2}\dfrac{x_u^2 + y_u^2}{a^2 - (x_u^2 + y_u^2)} + 1}}\dfrac{b}{a}\dfrac{x_u}{\sqrt{a^2 - (x_u^2 + y_u^2)}} \\[3em]
n_2 = \dfrac{1}{\sqrt{\dfrac{b^2}{a^2}\dfrac{x_u^2 + y_u^2}{a^2 - (x_u^2 + y_u^2)} + 1}}\dfrac{b}{a}\dfrac{y_u}{\sqrt{a^2 - (x_u^2 + y_u^2)}}, else \\[3em]
n_3 = \dfrac{1}{\sqrt{\dfrac{b^2}{a^2}\dfrac{x_u^2 + y_u^2}{a^2 - (x_u^2 + y_u^2)} + 1}}
\end{vmatrix}
$$

$$
Azimuth = \begin{cases}
ACOS\left[\dfrac{(X_s - X_u)\nu_1 + (Y_s - Y_u)\nu_2 + (Z_s - Z_u)\nu_3}{\sqrt{(X_s - X_u)^2 + (Y_s - Y_u)^2 + (Z_s - Z_u)^2}}\right] & if\ (X_s - X_u)\mu_1 + (Y_s - Y_u)\mu_2 + (Z_s - Z_u)\mu_3 \geq 0 \\[3em]
2\pi - ACOS\left[\dfrac{(X_s - X_u)\nu_1 + (Y_s - Y_u)\nu_2 + (Z_s - Z_u)\nu_3}{\sqrt{(X_s - X_u)^2 + (Y_s - Y_u)^2 + (Z_s - Z_u)^2}}\right] & else
\end{cases}
$$

Le présent procédé a pour avantage principal une réduction de la complexité du procédé de calcul de la position du terminal, en tirant avantageusement partie de la constatation suivante :

- L'échec de réception d'un signal satellitaire est majoritairement provoqué par un effet de blocage lui même induit par un matériau bloquant obstruant une zone définie par un contour azimut-élévation donné du point de vue du terminal,

- Ledit matériau bloquant les signaux provenant des satellites d'une des constellations a une forte probabilité de bloquer les signaux provenant de satellites d'une autre constellation se trouvant dans ladite zone azimut-élévation,
- L'utilisation dans le calcul du positionnement de signaux provenant de satellites confinés dans une zone réduite azimut-élévation n'apporte qu'un gain très mince à la précision de la localisation.

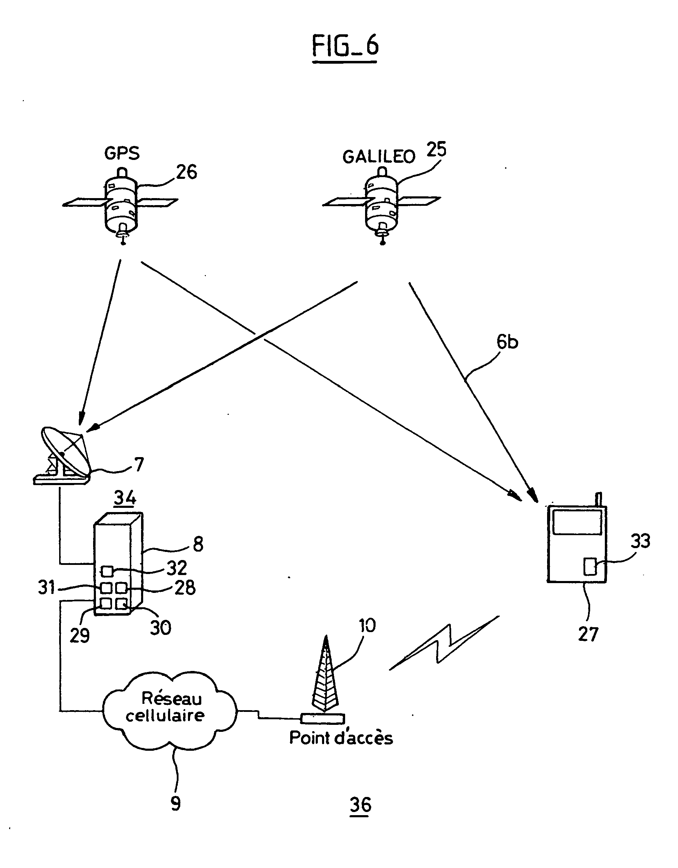

Le procédé selon l'invention trouve une mise en oeuvre avantageuse dans un système d'assistance à la navigation de terminaux mobiles GPS/GNSS assisté, tel que représenté sur la figure 6 selon un de ses modes de réalisation.

Ce système 36 d'assistance à la navigation de terminaux mobiles GPS/GNSS assisté comprend les éléments suivants :

- un serveur 34 de données d'assistance GNSS,
- un réseau 9 de télécommunication cellulaire,
- le terminal 27 couplant les fonctionnalités d'émetteur-récepteur compatible du réseau de télécommunication cellulaire et du système de positionnement par satellites GNSS,
- au moins deux constellations de positionnement par satellites différentes, GPS et Galileo.

Le serveur 34 comprend :

- des moyens 29 d'estimation de la position des satellites desdites premières et secondes constellations par le biais de son antenne de contrôle 7,
- des moyens 28 de détermination d'une pré-localisation approximative du terminal. Cette détermination de pré-localisation peut se faire depuis une information provenant dudit réseau de télécommunication, ou peut, entre autres, provenir de la position de la station de base de la cellule dans laquelle se trouve le terminal.
- des moyens 30 de résolution de la liste des satellites visibles depuis le terminal en fonction de la pré-localisation approximative déterminée du terminal et de la position estimée des satellites,
- des moyens 31 de calcul de l'élévation et l'azimut de chaque satellite de la liste de satellites visibles depuis le terminal en fonction de la pré-localisation approximative du terminal,
- des moyens de tri 32 des satellites de la liste de satellites visibles en :

  ■ privilégiant l'une desdites constellations satellitaires sur un critère de performance,
  ■ en excluant de la liste de satellites visibles l'ensemble des satellites appartenant aux autres constellations que la constellation privilégiée et dont la position en azimut et élévation du point de vue du terminal se trouve confinée dans un domaine angulaire prédéterminé par rapport à un des satellites de la constellation privilégiée.

- des moyens de transmission au terminal 27 des données d'assistance relative à la liste de satellites visibles depuis le terminal, privée des satellites exclus. Dans le cas présent, la transmission s'effectue par le biais du réseau cellulaire 9 et le point d'accès 10.

Le terminal 27 comporte des moyens de traitement 33 des signaux satellitaires de chaque satellite de la liste de satellites visibles des satellites, privée de ceux qui ont été exclus.

On notera que les moyens référencés 28 à 32 sont préférentiellement des moyens logiciels exécutés par un microprocesseur non représenté.

La présente mise en oeuvre permet, outre la réduction de complexité de traitement au niveau du terminal, de réduire la quantité de données transitant sur le réseau de télécommunications cellulaires.

**Revendications**

1. Procédé de gestion des signaux satellitaires de positionnement (15a,15b,15c) provenant d'une première (GPS,26) et d'une seconde (Galileo, 25) constellations de satellites d'un premier et d'un second système de localisation par satellites pour localiser un terminal mobile (27) d'un réseau de communications cellulaires capable d'échanger des signaux satellitaires avec les premier et second systèmes de localisation par satellites (GPS, GPS assisté, Galileo, Galileo assisté),
   **caractérisé en ce que** ledit procédé comprend les étapes suivantes :

- une étape (16) de détermination d'une pré-localisation approximative du terminal,
- une étape (17) d'estimation de la position des satellites desdites premières et secondes constellations,
- une étape de résolution de la liste des satellites visibles depuis le terminal en fonction de la pré-localisation approximative déterminée du terminal et de la position estimée des satellites,
- une étape (18) de calcul de l'élévation et l'azimut de chaque satellite de la liste de satellites visibles depuis le terminal en fonction de la position approximative du terminal,
- une étape de tri (21,22,23,24) des satellites de la liste de satellites visibles en :

  ■ privilégiant l'une desdites constellations satellitaires sur un critère de performance,
  ■ en excluant (24) de la liste de satellites visibles l'ensemble des satellites appartenant aux autres constellations que la constellation privilégiée et dont la position en azimut et élévation du point de vue du terminal se trouve confinée dans un domaine angulaire prédéterminé par rapport à un des satellites de la constellation privilégiée.

**2.** Procédé selon la revendication 1, **caractérisé en ce que** l'attribution [20] de la qualité de constellation privilégiée s'effectue par la construction [19] de N groupes de satellites appartenant à la liste de satellites visibles depuis le terminal, où N correspond au nombre de constellations de positionnement par satellites utilisées dans le calcul de la position de l'utilisateur, un groupe de satellites étant défini **en ce que** tous les satellites d'un même groupe appartiennent à la même constellation, la constellation prenant la qualité de privilégiée avec un indice 1 étant considérée **en ce que** les caractéristiques physiques des signaux provenant de cette dernière sont plus favorables à la performance de positionnement.

**3.** Procédé selon la revendication 2, **caractérisé en ce que** l'étape de tri des satellites (21,22,23,24), pour chaque satellite $Sat_i$ de la constellation 2 à N, met en oeuvre les phases suivantes :

  - Calcul (22) de l'écart d'angle entre l'azimut du satellite $Sat_i$ et l'azimut de l'ensemble des satellites de la constellation 1,
  - Calcul (23) de l'écart d'angle entre l'élévation du satellite $Sat_i$ et l'élévation de l'ensemble des satellites de la constellation 1,
  - Elimination (24) du satellite $Sat_i$ de la liste de satellites visibles depuis la position du terminal si les écarts d'angle d'élévation et d'azimut sont respectivement inférieurs à une valeur donnée (A0,E0).

**4.** Procédé selon l'une des revendications 1 à 3, **caractérisé en ce que** l'étape (16) de détermination d'une pré-localisation approximative du terminal utilise soit le résultat d'une triangulation au sein du réseau de communications cellulaires pour en déduire la pré-localisation, soit une information de localisation provenant de la position d'une station de base de la cellule dans laquelle se trouve le terminal.

**5.** Procédé selon l'une des revendications 1 à 3, **caractérisé en ce que** l'étape (16) de détermination d'une pré-localisation approximative du terminal utilise une pré-localisation antérieure du terminal.

**6.** Procédé selon l'une des revendications 1 à 5, **caractérisé en ce qu'**il comprend une étape de traitement par le terminal des signaux satellitaires de chaque satellite de la liste de satellites visibles des satellites, privée de ceux qui ont été exclus.

**7.** Système de gestion des signaux satellitaires de positionnement (15a,15b,15c) provenant d'une première (GPS,26) et d'une seconde (Galileo, 25) constellations de satellites d'un premier et second systèmes de localisation par satellites pour localiser un terminal mobile (27) d'un réseau de communications cellulaires capable d'échanger des signaux satellitaires avec le premier et le second systèmes de localisation par satellites (GPS, GPS assisté, Galileo, Galileo assisté),
**caractérisé en ce que** ledit système de gestion comprend :

  - des moyens (28) de détermination d'une pré-localisation approximative du terminal,
  - des moyens (29) d'estimation de la position des satellites desdites premières et secondes constellations,
  - des moyens (30) de résolution de la liste des satellites visibles depuis le terminal en fonction de la pré-localisation approximative déterminée du terminal et de la position estimée des satellites,
  - des moyens (31) de calcul de l'élévation et l'azimut de chaque satellite de la liste de satellites visibles depuis le terminal en fonction de la pré-localisation approximative du terminal,
  - des moyens de tri (32) des satellites de la liste de satellites visibles en :

■ privilégiant l'une desdites constellations satellitaires sur un critère de performance,
■ en excluant de la liste de satellites visibles l'ensemble des satellites appartenant aux autres constellations que la constellation privilégiée et dont la position en azimut et élévation du point de vue du terminal se trouve confinée dans un domaine angulaire prédéterminé par rapport à un des satellites de la constellation privilégiée,

- des moyens de transmission (9,10) au terminal (27) des données d'assistance relative à la liste de satellites visibles depuis le terminal, privée des satellites exclus.

**8.** Système selon la revendication 7, **caractérisé en ce que** le système comprend un serveur de données d'assistance (34) qui intègre lesdits moyens (28) de détermination d'une pré-localisation approximative du terminal, lesdits moyens (29) d'estimation de la position des satellites desdites premières et secondes constellations, lesdits moyens (30) de résolution de la liste des satellites visibles depuis le terminal en fonction de la pré-localisation approximative déterminée du terminal et de la position estimée des satellites, lesdits moyens (31) de calcul de l'élévation et l'azimut de chaque satellite de la liste de satellites visibles depuis le terminal en fonction de la pré-localisation approximative du terminal, lesdits moyens de tri (32) des satellites de la liste de satellites visibles, et des moyens de transmission (35) au terminal des données d'assistance relative à la liste de satellites visibles depuis le terminal, privée des satellites exclus.

## Claims

**1.** Method of management of positioning satellite signals (15a, 15b, 15c) coming from a first constellation of satellites (GPS, 26) and a second constellation of satellites (Galileo, 25) of a first and a second satellite location system for locating a mobile terminal (27) of a cellular communication network capable of exchanging satellite signals with the first and second satellite location systems (GPS, Assisted GPS, Galileo, Assisted Galileo), **characterized in that** said method comprises the following steps:

- a step (16) of determination of an approximate pre-location of the terminal,
- a step (17) of estimation of the position of the satellites of said first and second constellations,
- a step of resolution of the list of satellites visible from the terminal as a function of the approximate pre-location of the terminal that has been determined and from the estimated position of the satellites,
- a step (18) of calculation of the elevation and the azimuth of each satellite from the list of satellites visible from the terminal as a function of the approximate position of the terminal,
- a step (21, 22, 23, 24) of sorting of the satellites from the list of visible satellites by:

■ giving preference to one of said satellite constellations on the basis of a performance criterion,
■ excluding (24) from the list of visible satellites all of the satellites belonging to the constellations other than the preferred constellation and the position whereof in azimuth and in elevation from the point of view of the terminal is confined within a predetermined angular range relative to one of the satellites of the preferred constellation.

**2.** Method according to claim 1, **characterized in that** the qualification [20] of the constellation as the preferred constellation is effected by the construction [19] of N groups of satellites belonging to the list of satellites visible from the terminal, where N corresponds to the number of satellite positioning constellations used in the calculation of the position of the user, a group of satellites being defined **in that** all the satellites of the same group belong to the same constellation, the constellation assuming the preferred quality with an index 1 being considered **in that** the physical characteristics of the signals coming from the latter are more favorable to positioning performance.

**3.** Method according to claim 2, **characterized in that** the step of sorting of the satellites (21, 22, 23, 24), for each satellite $Sat_i$ of the constellation 2 to N, utilizes the following phases:

- calculation (22) of the angular difference between the azimuth of the satellite $Sat_i$ and the azimuth of all of the satellites of the constellation 1,
- calculation (23) of the angular difference between the elevation of the satellite $Sat_i$ and the elevation of all of the satellites of the constellation 1,
- elimination (24) of the satellite $Sat_i$ from the list of satellites visible from the position of the terminal if the elevation and azimuth angular differences are less than a respective given value (A0, E0).

**4.** Method according to any one of claims 1 to 3, **characterized in that** the step (16) of determination of an approximate pre-location of the terminal utilizes either the result of a triangulation within the cellular communication network to deduce the pre-location therefrom, or location information coming from the position of a base station of the cell in which the terminal is situated.

**5.** Method according to any one of claims 1 to 3, **characterized in that** the step (16) of determination of an approximate pre-location of the terminal utilizes an earlier pre-location of the terminal.

**6.** Method according to any one of claims 1 to 5, **characterized in that** it comprises a step of processing by the terminal of satellite signals from each satellite from the list of visible satellites, minus those that have been excluded.

**7.** System for management of positioning satellite signals (15a, 15b, 15c) coming from a first constellation of satellites (GPS, 26) and a second constellation of satellites (Galileo, 25) of a first and a second satellite location system for locating a mobile terminal (27) of a cellular communication network capable of exchanging satellite signals with the first and second satellite location systems (GPS, Assisted GPS, Galileo, Assisted Galileo), **characterized in that** said management system comprises:

- means (28) for determination of an approximate pre-location of the terminal,
- means (29) for estimation of the position of the satellites of said first and second constellations,
- means (30) for resolution of the list of satellites visible from the terminal as a function of the approximate pre-location of the terminal that has been determined and from the estimated position of the satellites,
- means (31) for calculation of the elevation and the azimuth of each satellite from the list of satellites visible from the terminal as a function of the approximate provocation of the terminal,
- means (32) for sorting of the satellites from the list of visible satellites by:

■ giving preference to one of said satellite constellations on the basis of a performance criterion,
■ excluding from the list of visible satellites all of the satellites belonging to the constellations other than the preferred constellation and the position whereof in azimuth and in elevation from the point of view of the terminal is confined within a predetermined angular range relative to one of the satellites of the preferred constellation.

- means (9, 10) for transmission to the terminal (27) of assistance data relating to the list of satellites visible from the terminal, minus the excluded satellites.

**8.** System according to claim 7, **characterized in that** the system comprises an assistance data server (34) that integrates said means (28) for determination of an approximate pre-location of the terminal, said means (29) for estimation of the position of the satellites of said first and second constellations, said means (30) for resolution of the list of satellites visible from the terminal as a function of the approximate pre-location of the terminal that has been determined and the estimated position of the satellites, said means (31) for calculation of the elevation and the azimuth of each satellite from the list of satellites visible from the terminal as a function of the approximate pre-location of the terminal, said means (32) for sorting the satellites from the list of visible satellites, and means (35) for transmission to the terminal of assistance data relating to the list of satellites visible from the terminal, minus the excluded satellites.

**Patentansprüche**

**1.** Verfahren zur Verwaltung von Satellitenpositionierungssignalen (15a, 15b, 15c), welche von einer ersten (GPS, 26) und einer zweiten (Galileo, 25) Satellitenkonstellation eines ersten und eines zweiten satellitengestützten Ortungssystems zur Ortung eines mobilen Endgeräts (27) eines zellularen Kommunikationssystems, welches fähig ist, Satellitensignale mit dem ersten und dem zweiten satellitengestützten Ortungssystem (GPS, unterstütztes GPS, Galileo, unterstütztes Galileo) auszutauschen, ausgestrahlt werden, **dadurch gekennzeichnet, dass** das besagte Verfahren die folgenden Schritte umfasst:

- Ein Schritt (16) zur Ermittlung einer approximativen Vorortung des Endgeräts,
- Ein Schritt (17) zur Schätzung der Position der Satelliten der besagten ersten und der besagten zweiten Konstellation,
- Ein Schritt zur Auflösung der Liste der vom Endgerät aus sichtbaren Satelliten entsprechend der vom Endgerät bestimmten approximativen Vorortung und der geschätzten Position der Satelliten,
- Ein Schritt (18) zur Berechnung der Elevation und des Azimuts eines jeden Satelliten der Liste der vom Endgerät aus sichtbaren Satelliten entsprechend der approximativen Position des Endgeräts,
- Ein Schritt zum Sortieren (21, 22, 23, 24) der Satelliten de Liste der sichtbaren Satelliten durch:

• Bevorzugung einer der besagten Satellitenkonstellationen entsprechend einem Leistungskriterium.
• Ausschließen (24) aller Satelliten aus der Liste der sichtbaren Satelliten, welche zu den sich von der bevorzugten Konstellation unterscheidenden Konstellation gehören und deren Azimut- und Elevationsposition aus Sicht des Endgeräts in einem entsprechend einem der Satelliten der bevorzugten Konstellation vorgegebenen Winkelbereich eingegrenzt ist.

2. Verfahren nach Anspruch 1, **dadurch gekennzeichnet, dass** die Zuteilung [20] der Qualität der bevorzugten Konstellation durch das Einrichten [19] von N Satellitengruppen, welche der Liste der vom Endgerät aus sichtbaren Satelliten angehören, erfolgt, wobei N der Anzahl der für die Berechnung der Position des Benutzers benutzten satellitengestutzten Positionierungskonstellationen entspricht, wobei eine Satellitengruppe dadurch definiert wird, dass alle Satelliten einer selben Gruppe der selben Konstellation angehören, wobei davon ausgegangen wird, dass die physikalischen Eigenschaften der von der Konstellation, welche die Qualität einer bevorzugten Konstellation mit einem Index 1 annimmt, ausgestrahlten Signale für die Positionierungsleistung günstiger sind.

3. Verfahren nach Anspruch 2, **dadurch gekennzeichnet, dass** der Schritt des Sortierens der Satelliten (21, 22, 23, 24), für jeden Satelliten $Sat_i$ der Konstellation 2 mit N, die folgenden Phasen implementiert:

- Berrechnen (22) der Winkelabweichung zwischen dem Azimut des Satelliten $Sat_i$ und dem Azimut aller Satelliten der Konstellation 1,
- Berechnen (23) der Winkelabweichung zwischen der Elevation des Satelliten $Sat_i$ und der Elevation aller Satelliten der Konstellation 1,
- Entfernen (24) des Satelliten $Sat_i$ aus der Liste der von der Position des Endgeräts aus sichtbaren Satelliten, wenn die Elevations- und Azimutwinkelabweichungen jeweils unter einem gegebenen Wert (A0, E0) liegen.

4. Verfahren nach einem beliebigen der Ansprüche 1 bis 3, **dadurch gekennzeichnet, dass** der Schritt (16) des Ermittelns einer approximativen Vorortung des Endgeräts entweder das Ergebnis der Triangulation innerhalb des zellularen Kommunikationsnetzes benutzt, um daraus die Vorortung abzuleiten, oder eine von der Position einer Basisstation der Zelle, in welcher sich das Endgerät befindet, kommende Ortungsinformation.

5. Verfahren nach einem der Ansprüche 1 bis 3, **dadurch gekennzeichnet, dass** der Schritt (16) des Ermittelns einer approximativen Vorortung des Endgeräts eine vorherige Vorortung des Endgeräts benutzt.

6. Verfahren nach einem der Ansprüche 1 bis 5, **dadurch gekennzeichnet, dass** es einen Schritt umfasst, in welchem das Endgerät die Satellitensignale eines jeden Satelliten der Liste der von den Satelliten sichtbaren Satelliten, ohne diejenigen, die davon ausgeschlossen sind, verarbeitet.

7. System zur Verwaltung von Satellitenpositionierungssignalen (15a, 15b, 15c), welche von einer ersten (GPS, 26) und einer zweiten (Galileo, 25) Satellitenkonstellation eines ersten und eines zweiten satellitengestützten Ortungssystems zur Ortung eines mobilen Endgeräts (27) eines zellularen Kommunikationssystems, welches fähig ist, Satellitensignale mit dem ersten und dem zweiten satellitengestutzten Ortungssystem (GPS, unterstütztes GPS, Galileo, unterstütztes Galileo) auszutauschen, ausgestrahlt werden,
**dadurch gekennzeichnet, dass** das besagte Verwaltungssystem umfasst:

- Mittel (28) zur Ermittlung einer approximativen Vorortung des Endgeräts,
- Mittel (29) zur Schätzung der Position der Satelliten der besagten ersten und der besagten zweiten Konstellation.
- Mittel (30) zur Auflösung der Liste der vom Endgerät aus sichtbaren Satelliten entsprechend der vom Endgerät bestimmten approximativen Vorortung und der geschätzten Position der Satelliten,
- Mittel (31) zur Berechnung der Elevation und des Azimuts eines jeden Satelliten der Liste der vom Endgerät aus sichtbaren Satelliten entsprechend der approximativen Vorortung des Endgerät,
- Mittel (32) zum Sortieren der Satelliten der Liste der sichtbaren Satelliten durch:

• Bevorzugung einer der besagten Satellitenkonstellationen entsprechend einem Leistungskriterium,

• Ausschließen aller Satelliten aus der Liste der sichtbaren Satelliten, welche zu den sich von der bevorzugten Konstellation unterscheidenden Konstellation gehören und deren Azimut- und Elevationsposition aus Sicht des Endgeräts in einem entsprechend einem der Satelliten der bevorzugten Konstellation vorgegebenen Winkelbereich eingegrenzt ist,

- Mittel zur Übertragung (9, 10) der die Liste der vom Endgerät aus sichtbaren Satelliten, ohne die ausgeschlossenen Satelliten, betreffenden Hilfsdaten an das Endgerät (27).

8. System nach Anspruch 7, **dadurch gekennzeichnet, dass** das System einen Hitfsdaten-Server (34) umfasst, welcher die besagten Mittel (28) zur Ermittlung einer approximativen Vorortung des Terminals, die besagten Mittel (29) zur Schätzung der Position der Satelliten der besagten ersten und der besagten zweiten Konstellation, die besagten Mittel (30) zur Auflösung der Liste der vom Endgerät aus sichtbaren Satelliten entsprechend der vom Endgerät bestimmten approximativen Vorortung und der geschätzten Position der Satelliten, die besagten Mittel (31) zur Berechnung der Elevation und des Azimuts eines jeden Satelliten der Liste der vom Endgerät aus sichtbaren Satelliten entsprechend der approximativen Vorortung des Endgeräts, die besagten Mittel (32) zum Sortieren der Satelliten der Liste der sichtbaren Satelliten, und Mittel (35) zur Übertragung der die Liste der vom Endgerät aus sichtbaren Satelliten, ohne die ausgeschlossenen Satelliten, betreffenden Hilfsdaten integriert.

## FIG_1

# FIG_2

Satellite — 5

6a

6b

Antenne de contrôle — 7

Serveur d'assistance — 8

Réseau cellulaire — 9

Point d'accès — 10

Récepteur SPS Téléphone mobile — 11

# FIG_3

13a

13b

13c

Satellite SPS

Satellite SPS

Satellite SPS

15a

15b

15c

27

12a

14

12b

## FIG_4

## FIG_5

```
┌─────────────────────────────┐
│   Estimation d'une position  │────16
│  approximative du récepteur  │
└─────────────────────────────┘
              │
              ▼
┌─────────────────────────────┐
│   Calcul de la position des  │────17
│ satellites de chaque constellation │
└─────────────────────────────┘
              │
              ▼
┌─────────────────────────────┐
│  Calcul azimut(A) Elevation(E) │────18
│      de chaque satellite     │
└─────────────────────────────┘
              │
              ▼
┌─────────────────────────────┐
│   Séparation des satellites  │────19
│      par constellation       │
└─────────────────────────────┘
              │
              ▼
┌─────────────────────────────┐
│  Détermination de la constellation │────20
│       portant l'indice 1     │
└─────────────────────────────┘
              │
              ▼
┌─────────────────────────────┐
non │  Pour chaque satellite i de la │────21
  │ │    constellation 2 à N       │
  │ └─────────────────────────────┘
  │            │
  │            ▼
  │          ╱22
  │       ╱ Satk ╲
non ╱ de la constellation 1 tel ╲  oui
  │ ╲  que abs(Ai-Ak)  ╱
  │   ╲    <A0      ╱
  │      ╲  ╱
  │         │
  │         ▼
  │          ╱23
non ╱ abs(Ei-Ek)<E0 ╲  oui
  │   ╲           ╱
  │      ╲     ╱
  │         │
  │         ▼
  │ ┌─────────────────────────────┐
24─│  Elimination satellite i      │
  │ └─────────────────────────────┘
```

# FIG_6

GPS 26

GALILEO 25

6b

7

34

8

32

31 28

29 30

33

27

10

Réseau cellulaire

Point d'accès

9

36

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003231132 A